# EUROPÄISCHE PATENTSCHRIFT

(11) **EP 2 743 110 B1**
(45) Veröffentlichungstag und Bekanntmachung des Hinweises auf die Patenterteilung: **13.03.2019**
(21) Anmeldenummer: 13197249.9
(22) Anmeldetag: 13.12.2013
(51) Int. Cl.: B60H 1/32, B60H 1/00, F25D 11/00, B60P 3/20

(54) **KÄLTEMASCHINE FÜR EIN KÜHLFAHRZEUG UND VERFAHREN ZUM MINIMIEREN VON GERÄUSCHEMISSIONEN EINER SOLCHEN KÄLTEMASCHINE**
Refrigerating machine for a refrigerated vehicle and method for minimising noise emissions from such a refrigerating machine
Machine frigorifique pour véhicule frigorifique et procédé permettant de minimiser les émissions sonores d'une telle machine frigorifique

(30) Priorität: 13.12.2012 DE 102012112245
(43) Veröffentlichungstag der Anmeldung: 18.06.2014
(73) Patentinhaber: Schmitz Cargobull AG, 48341 Altenberge (DE)
(72) Erfinder: Dr. Flacke, Norbert, 45894 Gelsenkirchen (DE); Schanzmann, Martin, 46395 Bocholt (DE)
(74) Vertreter: Cohausz & Florack

(56) Entgegenhaltungen:
- WO-A1-2014/085672
- WO-A2-2011/005459
- JP-A- 2000 121 201
- US-A1- 2009 126 901

## Beschreibung

Kühlfahrzeuge der hier in Rede stehenden Art werden eingesetzt, um verderbliche Ware oder andere bei bestimmten niedrigen Temperaturen zu haltende Güter zu transportieren.

Typischerweise handelt es sich bei solchen Kühlfahrzeugen um Auflieger für einen Sattelzug, um LKW-Anhänger oder mit einem festen Aufbau ausgestattete Lastkraftwagen. Die bei solchen Nutzfahrzeugen vorgesehenen Aufbauten sind in der Regel nach Art eines Koffers quaderförmig ausgebildet und umgrenzen mit ihren festen Wänden den Laderaum, der das zu transportierende Gut aufnimmt.

Um die niedrige Temperatur im Laderaum aufrechtzuerhalten, werden Kältemaschinen eingesetzt. Diese sind in der Regel an der Stirnwand, auf dem Dach oder unter dem Boden des jeweiligen Nutzfahrzeugaufbaus montiert und versorgen den Laderaum mit gekühlter Luft, die entweder aus der Umgebung angesaugt, in der Kühlmaschine abgekühlt und dann in den Laderaum geleitet wird oder die im Umlauf von der Kühlmaschine aus dem Kühlraum abgezogen und nach der Kühlung zurück in den Kühlraum geblasen wird.

Autarke Kühlmaschinen, welche unabhängig von der Antriebsleistung des Nutzfahrzeugs betrieben werden, sind in der Regel mit einem Verbrennungsmotor ausgestattet, der über einen eigenen Tank mit Brennstoff versorgt wird. Der Verbrennungsmotor treibt dabei entweder über eine direkte mechanische Verkopplung oder unter Zwischenschaltung eines vom Verbrennungsmotor angetriebenen elektrischen Generators und eines vom Generator angetriebenen elektrischen Antriebs einen Kompressor an. Dieser verdichtet ein Kältemittel, über das in einem mit dem Kompressor in einem Kühlmittelkreislauf verbundenen Verdampfer dem Luftstrom Wärme entzogen wird, der den Verdampfer durchströmt. Üblicherweise wird dazu der Verbrennungsmotor in einem stationären Betrieb betrieben, bei dem er bei maximaler Nutzung der durch den Brennstoff bereitgestellten chemischen Energie und damit einhergehend minimiertem Verbrauch eine optimierte Antriebsleistung liefert.

Beim Betrieb eines Verbrennungsmotors entsteht unvermeidbar Lärm. Aufgrund des geringen für die Kältemaschine zur Verfügung stehenden Bauraums sind die Möglichkeiten einer Schalldämmung des Antriebsmotors jedoch begrenzt.

Zum Schutz gegen Lärmbelästigungen besteht in vielen Ländern die Vorschrift, dass in Wohngebieten zu bestimmten Zeiten, beispielsweise in der Nacht von 23:00 Uhr bis 07:00 Uhr des nächsten Tages, ein bestimmter Spitzengeräuschpegel, beispielsweise ein Höchstwert von 60 dB(A), nicht überschritten werden darf. Dieser Grenzwert ist so niedrig, dass beim Durchfahren eines entsprechend geschützten Wohngebiets mit einem Nutzfahrzeug, das mit einer im optimalen Betriebspunkt betriebenen Kältemaschine ausgestattet ist, die Gefahr besteht, dass er überschritten wird.

Das Dokument US 2009/0126901A1 offenbart ein Verfahren zum Betrieb einer an einem Omnibus vorgesehenen, von einem Motor mit Drehzahlregelung angetriebenen Kältemaschine zum Kühlen eines Innenraumes, umfassend folgende Schritte: - automatisch mit Hilfe einer Auswert- und Steuereinrichtung erfolgendes Erfassen der Position des Nutzfahrzeugs (60): - Abgleichen der erfassten Position des Nutzfahrzeugs (60) mit Informationen zur Lage einer Lärmschutzzone (siehe Absatz 20) durch die Auswert- und Steuereinrichtung; - Abgeben eines Steuersignals durch die Auswert- und Steuereinrichtung zur Minderung der Drehzahl des Motors der Kältemaschine (siehe Absatz 45) für den Fall, dass der Abgleich der erfassten Position des Nutzfahrzeugs mit den Informationen zur Lage einer Lärmschutzzone ergibt, dass sich das Nutzfahrzeug in der Lärmschutzzone (= Nähe zu einer Haltestelle, welche vor Lärm geschützt werden soll) befindet, - Abgeben eines Steuersignals durch die Auswert- und Steuereinrichtung zur Steigerung der Drehzahl des Verbrennungsmotors der Kältemaschine für den Fall, dass der Abgleich der erfassten Position des Nutzfahrzeugs mit den Informationen zur Lage einer Lärmschutzzone ergibt, dass sich das Nutzfahrzeug außerhalb der Lärmschutzzone (Absatz 56) befindet.

Das nachveröffentlichte Dokument WO 2014/085672 A1 beschreibt die Nutzung eines nicht näher bezeichneten GPS Systems zur Transportkältemaschinensteuerung.

Um diese Gefahr zu beseitigen, schlägt die Erfindung das in Anspruch 1 angegebene Verfahren vor.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Verfahren zum Betrieb einer an einem Nutzfahrzeug vorgesehenen, von einem Verbrennungsmotor mit Drehzahlregelung angetriebenen Kältemaschine zum Kühlen von in einem Laderaum des Nutzfahrzeugs verstautem Kühlgut, umfasst demnach folgende Schritte:
- Automatisch mit Hilfe einer Auswert- und Steuereinrichtung erfolgendes Erfassen der Position des Nutzfahrzeugs; unter Verwendung von am jeweiligen Nutzfahrzeug bereitstehenden Daten, die von einer Telematik-Einrichtung des Nutzfahrzeugs oder von einem Navigationssystem des Nutzfahrzeugs geliefert werden;
- Abgleichen der erfassten Position des Nutzfahrzeugs mit Informationen zur Lage einer Lärmschutzzone durch die Auswert- und Steuereinrichtung;
- Abgeben eines Steuersignals durch die Auswert- und Steuereinrichtung zur Minderung der Drehzahl des Verbrennungsmotors der Kältemaschine für den Fall, dass der Abgleich der erfassten Position des Nutzfahrzeugs mit den Informationen zur Lage einer Lärmschutzzone ergibt, dass sich das Nutzfahrzeug in der Lärmschutzzone befindet,
- Abgeben eines Steuersignals durch die Auswert- und Steuereinrichtung zur Steigerung der Drehzahl des Verbrennungsmotors der Kältemaschine für den Fall, dass der Abgleich der erfassten Position des Nutzfahrzeugs mit den Informationen zur Lage einer Lärmschutzzone ergibt, dass sich das Nutzfahrzeug außerhalb der Lärmschutzzone befindet.

Gemäß der Erfindung wird also die Drehzahl des Verbrennungsmotors der Kältemaschine des jeweiligen Nutzfahrzeugs ortsabhängig eingestellt, wobei der jeweilige Ort, an dem sich das Nutzfahrzeug mit seiner Kältemaschine befindet, mittels einer Information bestimmt wird, die aus einem vom Nutzfahrzeug mitgeführten Datenspeicher oder über einen Empfänger ermittelt wird, der zur Bestimmung des Standorts geeignete, drahtlos übertragene Datensignale empfängt.

Dementsprechend ist eine erfindungsgemäße durch einen Verbrennungsmotor angetriebene Kältemaschine mit einer Steuereinrichtung zur Regelung der Drehzahl ausgestattet und mit einer Empfangs- und Steuereinrichtung verkoppelt, die eine Information über die Position, an der sich das Nutzfahrzeug jeweils befindet, aus einem Datenspeicher oder anhand von Datensignalen ermittelt, die von ihr empfangen werden und in Abhängigkeit von der jeweils ermittelten Position ein Steuersignal zum Ändern der Drehzahl des Verbrennungsmotors abgibt.

Erfindungsgemäß wird somit eine Lärmreduktion der Kältemaschine dadurch erreicht, dass die Drehzahl des Verbrennungsmotors der Kältemaschine beim Einfahren in ein geschütztes Wohngebiet abgesenkt und beim Verlassen wieder angehoben wird. Die Veränderung der Drehzahl des Verbrennungsmotors erfolgt dabei automatisch, indem eine geeignete Empfangs- und Steuereinrichtung regelmäßig überprüft, wo sich das Nutzfahrzeug bzw. seine Kältemaschine befindet. Auf diese Weise wird die Leistung der Transportkältemaschine jeweils nur dort begrenzt, wo die Geräuschemission zu einer Belastung der Anwohner führen würde oder wo besondere Lärmschutzvorschriften bestehen. Außerhalb der betreffenden Gebiete wird die Kältemaschine dagegen ebenso automatisch wieder mit maximaler Leistung betrieben werden. Ein wesentlicher Vorteil der Erfindung besteht dabei darin, dass zur praktischen Umsetzung der Erfindung kein Eingriff in das Grundkonzept bestehender Kältemaschinen erforderlich ist. Es muss lediglich eine Steuerung für den Verbrennungsmotor vorgesehen werden, die in der Lage ist, die jeweils für die Ermittlung der jeweiligen Position erforderlichen Informationen zu sammeln und in Abhängigkeit von den jeweiligen Vorgaben Steuersignale zum Absenken oder Anheben der Motordrehzahl abzugeben.

Dabei erlaubt die Erfindung eine problemlose Anpassung der Betriebsweise der Kältemaschine an die in der jeweiligen Region geltenden Vorschriften. So können in einem Datenspeicher zu jedem Ort des jeweiligen Landes detaillierte Informationen beispielsweise zur Höhe der zulässigen Geräuschemissionen, zum Zeitraum besonderer Lärmschutzregelungen etc. abgelegt sein, anhand derer beim Betrieb der erfindungsgemäßen Kältemaschine bestimmt wird, wann und über welche Dauer der Antriebsmotor der Kältemaschine gedrosselt wird. Bei Nutzfahrzeugen, die stets vorausberechenbare, von vornherein festliegende Routen abfahren, kann es darüber hinaus ausreichen, wenn die im Datenspeicher abgelegten Daten so aufbereitet sind, dass anhand der jeweils zurückgelegten, beispielsweise durch einen konventionellen Kilometerzähler erfassten Wegstrecke die ebenso abgespeicherten, für die jeweils erreichte Position bezüglich der Geräuschemission geltenden Bedingungen zugeordnet werden können, auf deren Grundlage dann wiederum die Kältemaschine so geregelt wird, dass sie geringere Geräusche emittiert.

Eine optimal flexible erfindungsgemäße Steuerung der Drehzahl ergibt sich dann, wenn die Informationen, die für die Steuerung der Drehzahl des Antriebs einer erfindungsgemäßen Kältemaschine benötigt werden, in Form von Datensignalen empfangen werden, die drahtlos übertragen werden. Bei den im Zuge des erfindungsgemäßen Verfahrens empfangenen und verarbeiteten Datensignalen kann es sich beispielsweise um Signale von sog. "Global Positioning Systemen", kurzgenannt "GPS" handeln, die als Satellitennavigationssystem benutzt werden. Ebenso ist es denkbar, dass eine erfindungsgemäße Kältemaschine eine geeignete Empfangs- und Steuereinrichtung umfasst, die die Mobilfunkzelle ermittelt, in der sich die Kältemaschine bzw. das mit ihr ausgestattete Nutzfahrzeug befindet.
Hierzu kann eine Positionsbestimmung mit GSM erfolgen. Moderne GSM-Systeme erlauben hier bereits eine Positionsbestimmung mit hoher Genauigkeit, wobei diese Genauigkeit weiter verbessert werden kann, wenn ein GSM-gestütztes System um eine GPS-Unterstützung ergänzt wird. Auch kann eine Ortsbestimmung dadurch erfolgen, dass die von einer oder mehreren Antennen eines Mobilfunksystems oder anderer Funksysteme abgegebenen Funksignale erfasst und ausgewertet werden. Denkbar ist es zudem, an der Zu- und Ausfahrt von geschützten Wohngebieten Signalgeber anzuordnen, deren Signal von einer Empfangs- und Steuereinrichtung der Kältemaschine erfasst und in Steuersignale für den Verbrennungsmotor der Kältemaschine umgesetzt werden.

Erfindungsgemäß ist vorgesehen, im jeweiligen Fahrzeug bereits bereitstehende Daten für die Positionsbestimmung zu nutzen. So sind viele Nutzfahrzeuge der hier in Rede stehenden Art bereits mit Telematik-Einrichtungen ausgerüstet, die Daten über den Ort liefern, an dem sich das Nutzfahrzeug befindet. Auch liefern die im jeweiligen Nutzfahrzeug üblicherweise vorhandenen Navigationssysteme Informationen über die jeweilige Position. Diese Daten können so aufbereitet werden, dass sie unmittelbar für die erfindungsgemäße ortsabhängige Steuerung des Verbrennungsmotors einer Kältemaschine genutzt werden können. Die Ankopplung der erfindungsgemäß für die ortsabhängige Veränderung des Betriebszustands des Antriebsmotors einer Kältemaschine vorgesehenen Einrichtungen an die jeweils im Fahrzeug vorhandenen, Daten über die jeweilige Position liefernden Geräte kann beispielsweise über ein Daten-Bussystem erfolgen, mit dem moderne Nutzfahrzeuge häufig ausgestattet sind. Ebenso können andere heute verfügbare Datenübertragungswege, wie die Ankopplung über eine Bluetooth-Schnittstelle oder desgleichen, erfolgen.
Gemäß einer weiteren Ausgestaltung der Erfindung wird während des mit abgesenkter Drehzahl erfolgenden Betriebs die Temperaturentwicklung im Laderaum des Nutzfahrzeugs überwacht und ein Warnsignal abgegeben, wenn ein bestimmter Temperaturgrenzwert erreicht wird. Auf diese Weise kann verhindert werden, dass der Betriebszustand "abgesenkte Drehzahl" so lange aufrechterhalten wird, dass die Einhaltung der vorgeschriebenen Kühlkette in Frage steht. Dabei kann das Warnsignal eine nach Art eines Notbetriebs automatisch erfolgende zwangsweise Erhöhung der Drehzahl des Verbrennungsmotors und damit einhergehend der Kühlleistung der Kältemaschine bedingen.

Wenn hier von "Absenken" und "Anheben" der Drehzahl des Antriebsmotors der Kältemaschine die Rede ist, schließt dies selbstverständlich die Möglichkeit ein, den Antriebsmotor beim Eintritt in ein besonders lärmgeschütztes Gebiet vollständig abzuschalten und beim Verlassen des betreffenden Gebiets wieder einzuschalten.

Mit der Erfindung ist es somit möglich, die gesetzlichen Vorgaben zur Lärmreduktion automatisch einzuhalten. Dies erfolgt auf Grundlage einer Positionsbestimmung. Diese erlaubt eine zur Lärmreduzierung erfolgende Leistungsbeschränkung der Kältemaschine auf einen bestimmten Ort oder eine bestimmte Zeitdauer zu beschränken, während außerhalb des jeweiligen Ortes oder der jeweiligen Zeitspanne die Kältemaschine mit voller Maschinenleistung betrieben werden kann. Somit ist die Transportmaschine universell einsetzbar und liefert immer die maximale Leistung unter Berücksichtigung der Grenzwerte der Geräuschemission. Innerhalb der jeweils geltenden gesetzlichen Vorgaben steht somit über die erfindungsgemäße adaptive Drehzahlregelung die maximale Leistung zur Verfügung.

Der jeweilige Betriebszustand der Kältemaschine kann dem für die Einhaltung der jeweils für das Transportgut vorgeschriebenen Temperatur Verantwortlichen, also beispielsweise dem Fahrzeugführer oder einer räumlich entfernten überwachungszentrale des Spediteurs, per Datenfernübertragung mitgeteilt werden. Hierzu kann eine in erfindungsgemäßer Weise ausgebildete Steuereinrichtung, die die jeweilige Position des Fahrzeugs erfasst, überprüfen, ob sich das Fahrzeug in einem Lärmschutzgebiet befindet, und, falls dies zutrifft, ein Signal zur Absenkung der Motordrehzahl an die Motordrehzahlsteuerung abgibt, eine SMS, eine E-Mail oder eine in anderer Weise unter Nutzung verfügbarer Nachrichtenübertragungssysteme übermittelte Nachricht an den jeweils Verantwortlichen absenden. Die Nachricht kann dabei so qualifiziert sein, dass sie Aufschluss über die zu erwartende Temperaturentwicklung des jeweils bei der vorgegebenen Temperatur zu haltenden Transportguts gibt. Ergibt sich aus der Nachricht, dass mit der Absenkung der Motorleistung eine zu große Abweichung der Temperatur einhergehen wird, so kann der Verantwortliche eingreifen und im Sinne einer Notmaßnahme manuell ein Hochfahren der Leistung auch um den Preis erzwingen, dass die im jeweiligen Gebiet vorgeschriebenen Höchstwerte der Lärmbelastung erreicht werden.

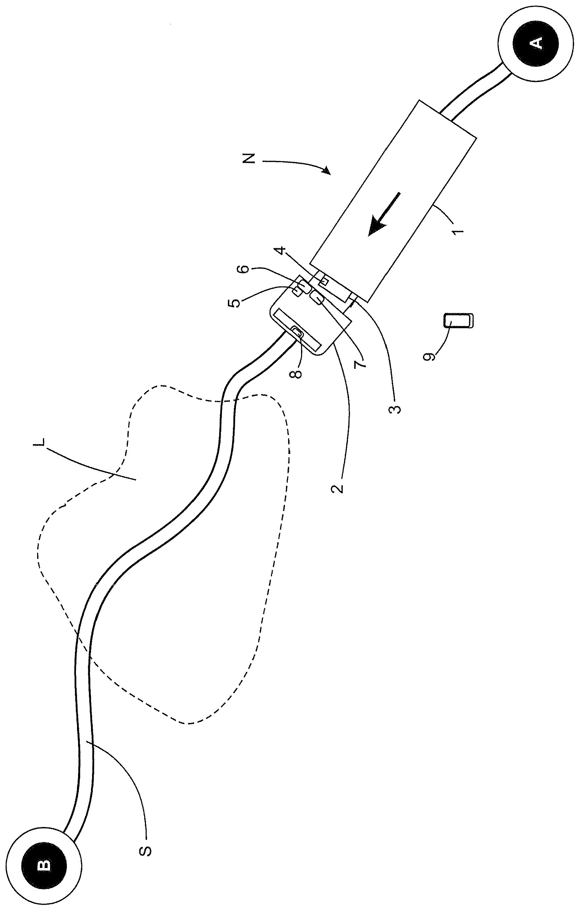

Genauso ist es selbstverständlich möglich, dass der Verantwortliche eine Nachricht erhält, wenn die Kältemaschine nach Verlassen der Lärmschutzzone wieder in Normalbetrieb genommen wird. Auch in diesem Fall besteht gemäß einer praxisgerechten Ausgestaltung der Erfindung die Möglichkeit, in die Steuerung einzugreifen, um eine Verminderung der Leistung und damit einhergehend eine Verminderung der Geräuschemissionen zu erzielen, wenn dies unter den jeweils gegebenen Umständen zweckmäßig erscheint.
Nachfolgend wird die Erfindung anhand eines Ausführungsbeispiels näher erläutert.
Die einzige Figur zeigt in Draufsicht schematisch eine Straßenkarte mit einem Nutzfahrzeug N, das auf einer Straße S von einem Ort A nach einem Ort B unterwegs ist. Zwischen diesen Orten liegt eine Lärmschutzzone L.
Das zum Transport von Kühlgut ausgerüstete, konventionell als Sattelzug mit einem Sattelauflieger 1 und einer Zugmaschine 2 aufgebaute Nutzfahrzeug N trägt auf seinem Sattelauflieger 2 in an sich ebenfalls bekannter Weise einen quaderförmigen Kofferaufbau, der einen Laderaum mit dem darin transportierten, hier nicht dargestellten Kühlgut umgrenzt. An der der Zugmaschine 2 zugeordneten Stirnseite des Kofferaufbaus ist eine Kältemaschine 3 befestigt, die das Kühlgut auf der jeweils vorbestimmten Temperatur hält.
Zu diesem Zweck ist die Kältemaschine 3 beispielsweise in der in der DE 10 2010 022 993 A1 beschriebenen Weise aufgebaut. Zur Verdeutlichung dieses Aufbaus wird der Inhalt der DE 10 2010 022 993 A1 genannt. Dementsprechend umfasst die Kältemaschine 3 einen Verbrennungsmotor, dessen Drehzahl über eine als Steuereinrichtung dienende Drehzahlregelung 4 der Kältemaschine 3 eingestellt werden kann.
Der Verbrennungsmotor treibt einen Generator an, der wiederum elektrische Energie für eine aus einem offenen Verdichter und einem elektrischen Anstriebsmotor gebildete Verdichtereinheit bereitstellt. Die Verdichtereinheit verdichtet ein Kältemittel, das anschließend durch einen Kondensator, eine Blende und einen Verdampfer geleitet wird, durch welchen gleichzeitig in wärmeleitendem Kontakt ein aus dem Laderaum entnommener und dorthin wieder zurückgeführter Luftstrom geleitet wird. Durch die Expansion des Kältemittels im Verdampfer wird dem Luftstrom Wärme entzogen, so dass er mit einer niedrigeren Temperatur in den Laderaum zurückströmt.
Wie die meisten der in der voranstehend erläuterten Art ausgebildeten Sattelzüge weist auch das Nutzfahrzeug N einen GPS-Empfänger 5 auf, der beispielsweise als Teil eines Navigationsgeräts 6 in der Zugmaschine 2 angeordnet ist.

Zusätzlich zu den bei konventionellen Nutzfahrzeugen der hier in Rede stehenden Art vorgesehenen Bau- und Funktionselementen umfasst das Nutzfahrzeug N eine mit dem GPS-Empfänger verkoppelte Auswert- und Steuereinrichtung 7, die anhand der vom GPS-Emfänger 5 empfangenen und ausgegebenen Positionsdaten mit in einem Datenspeicher beispielsweise des Navigationsgeräts 6 hinterlegten Informationen zur geographischen Lage der Lärmschutzzone L vergleicht.

Ergibt dieser Vergleich, dass das Nutzfahrzeug N in die Lärmschutzzone L einfährt, so gibt die Auswert- und Steuereinrichtung 7 an die Drehzahlregelung 4 ein Steuersignal ab, auf das hin die Drehzahlregelung 4 die Drehzahl des Verbrennungsmotors der Kältemaschine 3 soweit drosselt, dass die Lärmemissionen der Kältemaschine 3 unter den gesetzlichen Grenzwert fällt. Gleichzeitig wird eine entsprechende Nachricht auf einem im Fahrzeughaus der Zugmaschine 2 vorgesehenen Display 8 angezeigt. Alternativ oder ergänzend kann eine entsprechende Nachricht per Fernübertragung an einen geeigneten, vom Fahrzeugführer getragenen Empfänger, beispielsweise auf sein Mobiltelefon 9, übermittelt werden.

Stellt der Fahrzeugführer fest, dass die Drehzahlminderung nicht ausreicht, um unterhalb der vorgeschriebenen Lärmbelastungsgrenze zu bleiben, kann er durch einen manuellen Eingriff die Drehzahl weiter reduzieren. Ergibt sich aus der Nachricht oder den sonstigen Informationen, die dem Fahrzeugführer vorliegen, dass beispielsweise aufgrund der Verkehrssituation das Durchqueren der Lärmschutzzone L so lange dauern würde, dass die Einhaltung der vorgeschriebenen Temperatur des Kühlguts gefährdet wäre, so kann er die Lärmschutzzone umgehen. Im Fall, dass er in die Lärmschutzzone L eingefahren ist und es dort zu einem Stau kommt, welcher solange dauert, dass die bei verminderter Drehzahl von der Kühlmaschine 3 abgegebene Kühlleistung nicht ausreicht, um das Kühlgut bei der vorgeschriebenen Temperatur zu halten, kann der Fahrzeugführer auch hier eine Drehzahlerhöhung durch einen manuellen Eingriff erhöhen, um das Kühlgut nicht zu gefährden.

Beim Ausfahren aus der Lärmschutzzone L stellt die Auswert- und Steuereinrichtung 7 aufgrund der ihr vorliegenden Daten fest, dass die Drehzahl und damit die Leistung der Kältemaschine 3 wieder erhöht werden kann, und gibt ein entsprechendes Signal an die Drehzahlregelung 4 der Kältemaschine 3 ab.

### BEZUGSZEICHEN

- A,B: Orte
- L: Lärmschutzzone
- N: Nutzfahrzeug
- S: Straße

- 1: Sattelauflieger des Nutzfahrzeugs N
- 2: Zugmaschine des Nutzfahrzeugs N
- 3: Kältemaschine
- 4: Drehzahlregelung
- 5: GPS-Empfänger
- 6: Navigationsgerät
- 7: Auswert- und Steuereinrichtung
- 8: Display
- 9: Mobiltelefon

## Patentansprüche

1. Verfahren zum Betrieb einer an einem Nutzfahrzeug vorgesehenen, von einem Verbrennungsmotor mit Drehzahlregelung angetriebenen Kältemaschine zum Kühlen von in einem Laderaum des Nutzfahrzeugs verstautem Kühlgut, umfassend folgende Schritte:
- automatisch mit Hilfe einer Auswert- und Steuereinrichtung (7) erfolgendes Erfassen der Position des Nutzfahrzeugs (N) unter Verwendung von am jeweiligen Nutzfahrzeug (N) bereitstehenden Daten, die von einer Telematik-Einrichtung des Nutzfahrzeugs (N) oder von einem Navigationssystem (6) des Nutzfahrzeugs (N) geliefert werden;
- Abgleichen der erfassten Position des Nutzfahrzeugs (N) mit Informationen zur Lage einer Lärmschutzzone (L) durch die Auswert- und Steuereinrichtung (7);
- Abgeben eines Steuersignals durch die Auswert- und Steuereinrichtung (7) zur Minderung der Drehzahl des Verbrennungsmotors der Kältemaschine (3) für den Fall, dass der Abgleich der erfassten Position des Nutzfahrzeugs (N) mit den Informationen zur Lage einer Lärmschutzzone (L) ergibt, dass sich das Nutzfahrzeug (N) in der Lärmschutzzone befindet,
- Abgeben eines Steuersignals durch die Auswert- und Steuereinrichtung (7) zur Steigerung der Drehzahl des Verbrennungsmotors der Kältemaschine (3) für den Fall, dass der Abgleich der erfassten Position des Nutzfahrzeugs (N) mit den Informationen zur Lage einer Lärmschutzzone (L) ergibt, dass sich das Nutzfahrzeug (N) außerhalb der Lärmschutzzone (L) befindet.

2. Verfahren nach Anspruch 1, **dadurch gekennzeichnet, dass** die Bestimmung der jeweiligen Position des Nutzfahrzeugs (N) anhand der zurückgelegten Wegstrecke ermittelt wird und **dass** die im Datenspeicher abgelegten Daten so aufbereitet sind, dass anhand der jeweils zurückgelegten Wegstrecke die ebenso abgespeicherten, für die jeweils erreichte Position bezüglich der Geräuschemission geltenden Bedingungen zugeordnet werden, auf deren Grundlage die Kältemaschine (3) so geregelt wird, dass sie geringere Geräusche emittiert.

3. Verfahren nach einem der voranstehenden Ansprüche, **dadurch gekennzeichnet, dass** die Informationen, die für die Steuerung der Drehzahl des Antriebs einer erfindungsgemäßen Kältemaschine (3) benötigt werden, von einer Empfangseinrichtung in Form von Datensignalen empfangen werden, die drahtlos übertragen werden.

4. Verfahren nach Anspruch 3,**dadurch gekennzeichnet, dass** es sich bei den Datensignalen um Signale eines Global Positioning Systems, kurzgenannt "GPS", handelt.

5. Verfahren nach Anspruch 3 oder 4, **dadurch gekennzeichnet, dass** zur Ermittlung der Position des Nutzfahrzeugs (N) jeweils die Mobilfunkzelle ermittelt wird, in der sich das mit der Kältemaschine (3) ausgestattete Nutzfahrzeug (N) befindet.

6. Verfahren nach einem der Ansprüche 3 bis 5, **dadurch gekennzeichnet, dass** an der Zu- und Ausfahrt einer Lärmschutzzone (L) Signalgeber angeordnet sind, deren Signale von einer der Empfangseinrichtungen der Kältemaschine (3) erfasst und von der Auswert- und Steuereinrichtung (7) in Steuersignale für den Verbrennungsmotor der Kältemaschine (3) umgesetzt werden.

7. Verfahren nach einem der voranstehenden Ansprüche, **dadurch gekennzeichnet, dass** während des mit abgesenkter Drehzahl erfolgenden Betriebs die Temperaturentwicklung im Laderaum des Nutzfahrzeugs (N) überwacht und ein Warnsignal abgegeben wird, wenn ein bestimmter Temperaturgrenzwert erreicht wird.

8. Verfahren nach einem der voranstehenden Ansprüche, **dadurch gekennzeichnet, dass** Informationen über den Betriebszustand der Kältemaschine (3) auf einem Display angezeigt werden.

9. Verfahren nach Anspruch 8, **dadurch gekennzeichnet, dass** das Display (8) fest an dem Nutzfahrzeug (N) befestigt oder an einem mobilen Gerät (9) vorgesehen ist.

10. Nutzfahrzeug mit einer Kältemaschine zum Kühlen eines in einem Laderaum des Nutzfahrzeugs verstauten Kühlguts, wobei zum Antrieb der Kältemaschine ein Verbrennungsmotor und eine Steuereinrichtung vorgesehen sind, mittels der die Drehzahl des Verbrennungsmotors einstellbar ist, **dadurch gekennzeichnet, dass** die Kältemaschine (3) mit einer Empfangs- und Steuereinrichtung (7) verkoppelt ist, die unter Verwendung von am Nutzfahrzeug (N) bereitstehenden Daten, die eine Telematik-Einrichtung des Nutzfahrzeugs (N) oder ein Navigationssystem (6) des Nutzfahrzeugs (N) liefert, die Position, an der sich das Nutzfahrzeug (N) jeweils befindet, ermittelt und die in Abhängigkeit von der jeweils ermittelten Position ein Steuersignal zum Ändern der Drehzahl des Verbrennungsmotors gemäß einem der Ansprüche 1-9 abgibt.

11. Nutzfahrzeug nach Anspruch 10, **dadurch gekennzeichnet, dass** im Datenspeicher zu jedem Ort des jeweiligen Landes, in dem das Nutzfahrzeug (N) unterwegs ist, Informationen zur Höhe der zulässigen Geräuschemissionen oder zum Zeitraum besonderer Lärmschutzregelungen abgelegt sind.

## Claims

1. Method for operating a refrigerating machine, provided on a commercial vehicle and driven by a combustion engine with rotational speed control, for refrigerating goods to be refrigerated which are stowed in a cargo area of the commercial vehicle, comprising the following steps:
- automatically detecting the position of the commercial vehicle (N) carried out by means of an evaluation and control device (7) using data available on the respective commercial vehicle (N) which is delivered by a telematics device of the commercial vehicle (N) or by a navigation system (6) of the commercial vehicle (N);
- checking the detected position of the commercial vehicle (N) against information regarding the location of a noise protection zone (L) by means of the evaluation and control device (7);
- transmission of a control signal by the evaluation and control device (7) to reduce the rotational speed of the combustion engine of the refrigerating machine (3) for the case where the check of the detected position of the commercial vehicle (N) against the information regarding the location of a noise protection zone (L) results in the fact that the commercial vehicle (N) is in the noise protection zone (L),
- transmission of a control signal by the evaluation and control device (7) to increase the rotational speed of the combustion engine of the refrigerating machine (3) for the case where the check of the detected position of the commercial vehicle (N) against the information regarding the location of a noise protection zone (L) results in the fact that the commercial vehicle (N) is outside the noise protection zone (L).

2. Method according to Claim 1, **characterised in that** the respective position of the commercial vehicle (N) is determined based on the distance travelled, and **in that** the data stored in the data memory is prepared in such a way that the conditions, which are also stored and which apply to the respectively reached position with regard to noise emission, are assigned based on the distance respectively travelled, on the basis of which conditions the refrigerating machine (3) is regulated such that it emits less noise.

3. Method according to any one of the preceding claims, **characterised in that** the information required for controlling the rotational speed of the drive of a refrigerating machine (3) according to the invention is received by a receiving device in the form of data signals which are transmitted wirelessly.

4. Method according to Claim 3, **characterised in that** the data signals are signals from a Global Positioning System, called "GPS" for short.

5. Method according to Claim 3 or 4, **characterised in that** in order to determine the position of the commercial vehicle (N) in each case the mobile radiotelephone cell site, in which the commercial vehicle (N) equipped with the refrigerating machine (3) is located, is determined.

6. Method according to any one of Claims 3 to 5, **characterised in that** signal transmitters are located at the entry to and exit from a noise protection zone (L), the signals of which are detected by one of the receiving devices of the refrigerating machine (3) and are converted into control signals for the combustion engine of the refrigerating machine (3) by the evaluation and control device (7).

7. Method according to any one of the preceding claims, **characterised in that** the temperature development in the cargo area of the commercial vehicle (N) is monitored during operation at a lowered rotational speed and a warning is transmitted when a certain temperature threshold value is reached.

8. Method according to any one of the preceding claims, **characterised in that** information about the operating state of the refrigerating machine (3) is shown on a display.

9. Method according to Claim 8, **characterised in that** the display (8) is firmly attached to the commercial vehicle (N) or is provided on a mobile device (9).

10. Commercial vehicle having a refrigerating machine for refrigerating goods to be refrigerated which are stowed in a cargo area of the commercial vehicle, wherein a combustion engine and a control device are provided for driving the refrigerating machine, by means of which control device the rotational speed of the combustion engine can be adjusted, **characterised in that** the refrigerating machine (3) is coupled to a receiving and control device (7) which using data available on the commercial vehicle (N), which a telematics device of the commercial vehicle (N) or a navigation system (6) of the commercial vehicle (N) delivers, determines the position the commercial vehicle (N) is in in each case and which, depending on the respectively determined position, transmits a control signal to change the rotational speed of the combustion engine according to any one of Claims 1 to 9.

11. Commercial vehicle according to Claim 10, **characterised in that** information regarding the level of the permissible noise emissions or regarding the period of time where special noise protection regulations apply is stored in the data memory for every place in the respective country in which the commercial vehicle (N) travels.

## Revendications

1. Procédé pour faire fonctionner une machine frigorifique prévue sur un véhicule utilitaire, entraînée par un moteur à combustion avec réglage de vitesse de rotation et destinée à refroidir une marchandise réfrigérée rangée dans un espace de chargement du véhicule utilitaire, comportant les étapes suivantes :
- saisie automatique de la position du véhicule utilitaire (N) à l'aide d'un dispositif d'analyse et de commande (7), en utilisant des données étant disponibles au niveau du véhicule utilitaire (N) respectif, les données étant livrées par un dispositif télématique du véhicule utilitaire (N) ou par un système de navigation (6) du véhicule utilitaire ;
- comparaison de la position saisie du véhicule utilitaire (N) avec des informations sur la situation d'une zone de protection anti-bruit (L), par l'intermédiaire du dispositif d'analyse et de commande (7) ;
- émission d'un signal de commande par l'intermédiaire du dispositif d'analyse et de commande (7) pour réduire la vitesse de rotation du moteur à combustion de la machine frigorifique (3), dans le cas où la comparaison de la position saisie du véhicule utilitaire (N) avec les informations sur la situation d'une zone de protection anti-bruit (L) délivre comme résultat que le véhicule utilitaire (N) se trouve dans la zone de protection anti-bruit,
- émission d'un signal de commande par l'intermédiaire du dispositif d'analyse et de commande (7) pour l'augmentation de la vitesse de rotation du moteur à combustion de la machine frigorifique (3), dans le cas où la comparaison de la position saisie du véhicule utilitaire (N) avec les informations sur la situation d'une zone de protection anti-bruit (L) délivre comme résultat que le véhicule utilitaire (N) se trouve à l'extérieur de la zone de protection anti-bruit (L).

2. Procédé selon la revendication 1, **caractérisé en ce que** la détermination de la position respective du véhicule utilitaire (N) est effectuée à l'aide du chemin parcouru, et **en ce que** les données enregistrées dans la mémoire de données sont préparées de manière à associer, à l'aide du chemin respectivement parcouru, les conditions également sauvegardées applicables pour la position respectivement atteinte en matière d'émission sonore, sur la base desquelles la machine frigorifique (3) est réglée de manière à émettre des bruits plus faibles.

3. Procédé selon l'une des revendications précédentes, **caractérisé en ce que** les informations nécessaires pour commander la vitesse de rotation de l'entraînement d'une machine frigorifique (3) conforme à l'invention sont reçues par un dispositif de réception sous forme de signaux de données transmis sans fil.

4. Procédé selon la revendication 3, **caractérisé en ce qu'**il s'agit, dans le cas des signaux de données, de signaux d'un système de positionnement global (Global Positioning System), en abrégé « GPS ».

5. Procédé selon la revendication 3 ou 4, **caractérisé en ce que**, pour établir la position du véhicule utilitaire (N), la cellule téléphonique mobile respective dans laquelle se trouve le véhicule utilitaire (N) équipé de la machine frigorifique (3) est déterminée.

6. Procédé selon l'une des revendications 3 à 5, **caractérisé en ce que** des générateurs de signaux sont agencés à l'entrée et à la sortie d'une zone de protection anti-bruit (L), dont les signaux sont saisis par l'un des dispositifs de réception de la machine frigorifique (3) et sont transformés par le dispositif d'analyse et de commande (7) dans des signaux de commande pour le moteur à combustion de la machine frigorifique (3).

7. Procédé selon l'une des revendications précédentes, **caractérisé en ce que**, pendant le fonctionnement ayant lieu avec une vitesse de rotation abaissée, l'évolution de la température dans l'espace de chargement du véhicule utilitaire (N) est surveillée et que un signal d'avertissement est émis lorsque qu'un seuil limite de température donné est atteint.

8. Procédé selon l'une des revendications précédentes, **caractérisé en ce que** des informations concernant l'état de fonctionnement de la machine frigorifique (3) sont affichées sur un écran d'affichage.

9. Procédé selon la revendication 8, **caractérisé en ce que** l'écran d'affichage (8) est solidement fixé au véhicule utilitaire (N) ou prévu sur un appareil mobile (9).

10. Véhicule utilitaire pourvu d'une machine frigorifique pour refroidir une marchandise réfrigérée rangée dans un espace de chargement du véhicule utilitaire, où, pour l'entraînement de la machine frigorifique, un moteur à combustion et un dispositif de commande sont prévus, à l'aide duquel dispositif de commande la vitesse de rotation du moteur à combustion peut être réglée, **caractérisé en ce que** la machine frigorifique (3) est couplée à un dispositif de réception et de commande (7) qui détermine la position dans laquelle se trouve respectivement le véhicule utilitaire (N) en utilisant des données disponibles au niveau du véhicule utilitaire (N), les données étant délivrées par un dispositif télématique du véhicule utilitaire (N) ou un système de navigation (6) du véhicule utilitaire (N), et ledit dispositif de réception et de commande émettant, en fonction de la position respectivement déterminée, un signal de commande pour modifier la vitesse de rotation du moteur à combustion conformément à une des revendications de 1 à 9.

11. Véhicule utilitaire selon la revendication 10, **caractérisé en ce que** des informations concernant le niveau autorisé d'émissions sonores ou concernant la période de réglementations spéciales anti-bruit sont stockées dans la mémoire de données pour chaque lieu du pays respectif dans lequel le véhicule utilitaire (N) est en route.
